# EUROPÄISCHE PATENTSCHRIFT

(11) **EP 2 498 969 B1**
(45) Veröffentlichungstag und Bekanntmachung des Hinweises auf die Patenterteilung: **27.11.2013**
(21) Anmeldenummer: 10785005.9
(22) Anmeldetag: 04.11.2010
(51) Int. Cl.: B29C 45/17

(54) **DÜSENANPRESSVORRICHTUNG UND SPRITZGIESSMASCHINE MIT EINER SOLCHEN**
NOZZLE PRESSING DEVICE AND AN INJECTION MOLDING MACHINE WITH SUCH A DEVICE
DISPOSITIF DE SERRAGE DE BUSE ET UNE MACHINE DE MOULAGE PAR INJECTION AVEC UN TEL DISPOSITIF

(30) Priorität: 12.11.2009 DE 102009044506
(43) Veröffentlichungstag der Anmeldung: 19.09.2012
(73) Patentinhaber: Zhafir Plastics Machinery GmbH, 92263 Ebermannsdorf (DE)
(72) Erfinder: RABE, Hans, 92289 Ursensollen (DE); FRANZ, Steffen, 92224 Amberg (DE); ISSEL, Dirk, 91207 Lauf (DE); FRITZLAR, Volker, 92224 Amberg (DE); MEYER, Jörg, 92245 Kümmersbruck (DE); FENSTERER, Andreas, 92224 Amberg (DE)
(74) Vertreter: Lang, Christian
(86) Internationale Anmeldenummer: PCT/EP2010/066822
(87) Internationale Veröffentlichungsnummer: WO 2011/057943

(56) Entgegenhaltungen:
- EP-A1- 0 589 052
- DE-A1-102004 033 102
- JP-A- 6 285 909
- JP-A- 60 259 419
- JP-A- 2003 211 494
- US-A- 4 676 730

## Beschreibung

### HINTERGRUND DER ERFINDUNG

### GEBIET DER ERFINDUNG

Die vorliegende Erfindung betrifft eine Spritzgießmaschine mit einer Spritzeinheit, welche eine Düse umfasst, die gegen eine Form verfahrbar ist sowie eine Düsenanpressvorrichtung, die dafür sorgt, dass die Düse beim Spritzvorgang gegen die Form gehalten wird.

### STAND DER TECHNIK

Spritzgießmaschinen sind insbesondere zur Herstellung von Kunststoffbauteilen weit verbreitet. Die Spritzgießmaschinen umfassen hierbei im Wesentlichen zwei Baueinheiten, nämlich einerseits die Schließvorrichtung, die das Öffnen und Schließen einer entsprechenden Form bzw. eines Werkzeugs bewirkt, und eine Spritzeinheit, mit der fließfähiges Material in die Form gespritzt wird.

Die Spritzeinheit ist üblicherweise gegenüber der Form verfahrbar ausgebildet, so dass beim Spritzvorgang sicher gestellt werden muss, dass die Düse, durch welche das zu verspritzende Material die Spritzeinheit verlässt, dicht an dem Formwerkzeug anliegt, so dass einerseits der Spritzdruck aufrechterhalten werden kann und andererseits kein zu verspritzendes Material durch entsprechende Leckagen zwischen Düse und Form verloren geht.

Aus dem Stand der Technik sind entsprechende Düsenanpressvorrichtungen bekannt, die dafür sorgen, dass die Düse während des Spritzvorgangs und insbesondere auch während eines Nachspritzens von zu verspritzendem Material in die Form sicher und fest an der Form anliegt. Beispiele hierfür sind in der DE 42 32 533 A1 bzw. der EP 1 364 765 A1 gegeben. Bei beiden dort beschriebenen Vorrichtungen ist bei einer Antriebseinheit, die einen Spindelmotor und eine Gewindespindel zur Bewegung der Spritzeinheit in Richtung der Form umfasst, zwischen der Spindelmutter und dem verfahrbaren Teil der Spritzeinheit, welche der beweglichen Spindelmutter zugeordnet ist, ein Federelement in Form einer Spiralfeder angeordnet, die durch ihre elastische Verformung eine Düsenanpresskraft bereitstellt. Allerdings ist bei diesen Düsenanpressvorrichtungen nachteilig, dass die Düsenanpresskraft durch die Anordnung des Federelements zwischen beweglichen Teilen anfällig gegenüber äußeren Einflüssen ist und somit nicht ausreichend exakt einstellbar ist. Außerdem ist die Feder versetzt zur Spritzachse angeordnet, die durch den Spritzzylinder und die Düse definiert ist, so dass zusätzliche Momente an der Spritzeinheit entstehen können, die ebenfalls die exakte und definierte Anlage einer Düsenanpresskraft beeinträchtigen.

Außerdem ist die Anordnung der Feder aufwändig und die Verwendung von Schraubenfedern für den angestrebten Einsatzzweck unbefriedigend, da die Schraubenfedern hinsichtlich ihrer Federsteifigkeit üblicherweise so ausgelegt werden müssen, dass der Federweg relativ lang und somit die Zeit bis zum Kraftaufbau ebenfalls lang ist.

### OFFENBARUNG DER ERFINDUNG

### AUFGABE DER ERFINDUNG

Es ist deshalb Aufgabe der vorliegenden Erfindung eine Spritzgießmaschine bzw. eine entsprechende Düsenanpressvonichtung zu schaffen, die die Nachteile des Standes der Technik vermeidet und insbesondere eine exakte und definierte Aufbringung einer Düsenanpresskraft ermöglicht und diese Düsenanpresskraft insbesondere auch ohne weitere Betätigung der Antriebseinheit für die Spritzeinheit aufrechterhält. Hierbei soll die entsprechende Vorrichtung einfach aufgebaut und einfach und sicher verwendbar sein.

### TECHNISCHE LÖSUNG

Diese Aufgabe wird gelöst durch eine Spritzgießmaschine mit den Merkmalen des Anspruchs 1 sowie einer Düsenanpressvorrichtung mit dem Merkmal des Anspruchs 10. Vorteilhafte Ausgestaltungen sind Gegenstand der abhängigen Ansprüche.

Die Erfindung geht aus von der Erkenntnis, dass die Antriebseinheit, welche die Bewegung der Spritzeinheit mit der Düse gegenüber dem Formwerkzeug ermöglicht, in einfacher und effektiver Weise zur Erzeugung eines Düsenanpressdruckes genutzt werden kann. Hierbei wird davon ausgegangen, dass die Antriebseinheit so gestaltet ist, dass sie zwei Verbindungsseiten aufweist, die zur Verbindung mit anzutreibenden Komponenten vorgesehen sind. Die anzutreibenden Komponenten können hierbei beispielsweise einerseits durch die Spritzeinheit und andererseits durch den Maschinenrahmen oder das Maschinenbett der Spritzgießmaschine gegeben sein, wobei sich die Spritzeinheit relativ zum Maschinenrahmen bzw. zum Maschinenbett bewegt. Durch die relative Bewegung der Verbindungsseiten der Antriebseinheit, die somit einerseits an der beweglichen Spritzeinheit und andererseits an dem ortsfesten Maschinenrahmen oder Maschinenbett angeordnet sind, kann durch Zwischenschaltung eines Federelements, welches elastisch verformbar ist, eine Federkraft erzeugt werden, welche als Düsenanpresskraft genutzt werden kann.

Dies kann erfindungsgemäß in vorteilhafter Weise dadurch erfolgen, dass das Federelement am Maschinenrahmen oder Maschinenbett vorgesehen ist und eine Verbindungsseite der Antriebseinheit mit dem Federelement verbunden bzw. in diesem gelagert ist, so dass durch die Antriebseinheit eine Verformung des Federelements ermöglicht wird und somit eine Düsenanpresskraft erzeugt werden kann. Durch die Anordnung des Federelements am Maschinenrahmen oder Maschinenbett ergibt sich eine optimale Krafteinleitung der Gegenkraft in den Maschinenrahmen bzw. das Maschinenbett, so dass eine definierte Aufbringung einer exakten Düsenanpresskraft ermöglicht wird, wobei unterschiedlichste Federelemente im Hinblick auf die Art und Gestaltung des eingesetzten Federelements einsetzbar sind. Darüber hinaus ergibt sich eine einfache Anordnungsmöglichkeit für das Federelement.

Bei der Antriebseinheit kann es sich um einen Antrieb und eine Einheit zur Erzeugung einer translatorischen Bewegung handeln, wobei vielfältige Ausführungsformen denkbar sind. So kann beispielsweise ein Aktuator, der eine lineare Bewegung einer Antriebsstange ermöglicht, eingesetzt werden oder ein Spindelmotor mit einer von dem Motor angetriebenen Gewindespindel, welche mit einer Spindelmutter zusammenwirkt. Durch Drehung der Gewindespindel kann der Abstand zwischen Spindelmutter und Spindelmotor variiert werden und somit kann eine entsprechende translatorische Bewegung erzeugt werden. Alternativ kann bei einem Spindelantrieb statt der Gewindespindel auch die Spindelmutter angetrieben werden, so dass sich die Gewindespindel relativ zur Spindelmutter linear bewegt. Insbesondere kann ein Spindelantrieb mit kleiner Gewindesteigung des Spindelgewindes eingesetzt werden, d.h. insbesondere ein Spindelantrieb, bei dem die Steigung der Gewindespindel vorzugsweise klein gewählt wird.

Darüber hinaus sind vielfältige Formen der Antriebseinheit zur Erzeugung einer translatorischen Bewegung denkbar. So kann beispielsweise der Aktuator als hydraulischer oder pneumatischer Antrieb verwirklicht sein, wobei eine Kolbenstange die translatorische Bewegung ausführt.

Die oben genannten Verbindungsseiten der Antriebseinheit können somit zum einen durch den Motor d. h. den Spindelmotor und andererseits durch die Spindelmutter oder durch einen Aktuator und eine davon angetriebene linear bewegliche Betätigungsstange gebildet sein.

Jede Verbindungsseite der Antriebseinheit kann an dem elastischen Federelement angeordnet sein oder mit diesem in entsprechender Wirkverbindung stehen. So kann also beispielsweise bei einem Spindelantrieb entweder die Spindelmutter fest an dem elastischen Federelement angeordnet sein oder der Spindelmotor.

Die weitere Verbindungsseite der Antriebseinheit kann an jeder geeigneter Stelle des Maschinenrahmens oder Maschinenbetts angeordnet werden, insbesondere an Traversen des Maschinenrahmens oder einer feststehenden Werkzeugaufspannplatte.

Die Verbindung der Verbindungsseite der Antriebseinheit mit dem Federelement kann unmittelbar und direkt erfolgen oder über entsprechend starre Verbindungselemente. Insbesondere kann die Verbindungsseite der Antriebseinheit über ein Festlager kinematisch bestimmt gelagert sein.

Das Federelement kann als Stab oder Platte, beispielsweise in Form einer Blattfeder oder durch ein entsprechend ausgebildetes Bauteil des Maschinenrahmens oder Maschinenbetts ausgebildet sein. Insbesondere kommt in Betracht, quer zur Spritzrichtung angeordnete Traversen eines Maschinenrahmens entsprechend elastisch auszubilden, um als Federelement eingesetzt zu werden. Eine entsprechende elastische Ausbildung kann durch Herstellung aus einem entsprechenden Federstahl in einfacher Weise verwirklicht werden.

Ein entsprechendes Federelement kann einen kurzen Federweg, d.h. eine elastische Verformung, z. B. maximale Durchbiegung, von kleiner oder gleich 10 mm, insbesondere im Bereich von 1 bis 3 mm aufweisen, so dass ein kurzer Federweg und somit schneller Kraftaufbau gewährleistet ist.

Ein entsprechendes Federelement kann nicht nur in einfacher Weise an der Spritzgießmaschine angeordnet werden, sondern insbesondere auch zentriert zur Spritzachse vorgesehen werden, so dass das Federelement einen Federweg aufweist, der parallel oder konzentrisch zur Spritzachse oder in einer Ebene verläuft, die durch die Spritzachse geht. Insbesondere kann eine Durchbiegung des Stabs oder der Platte in eine Richtung entgegen der Spritzrichtung als Federweg vorgesehen sein, so dass die entsprechend erzeugte Düsenanpresskraft die Düse vollständig in Richtung der Form drückt.

Entsprechend können das Federelement und/oder das-daran angeordnete Bauteil der Verbindungsseite der Antriebseinheit konzentrisch zur Spritzachse oder Düsenspitze vorgesehen sein. Allerdings ist auch eine aus der Spritzachse versetzte Anordnung des Federelements und/oder des daran angeordneten Bauteils der Verbindungsseite der Antriebseinheit möglich, insbesondere in einer Richtung versetzt, die quer zur Spritzachse, jedoch durch die Spritzachse hindurch verläuft.

Für die Lagerung des Federelements an dem Maschinenrahmen bzw. dem Maschinenbett kann eine momentfreie Lagerung vorgesehen werden, welche entsprechende Einflüsse durch zusätzliche Kraft- oder Momenteinwirkungen vermeidet. Wären die Enden eines Federelements beispielsweise starr am Maschinenrahmen oder dem Maschinenbett gelagert, so würden durch die Verformung des Federelements zusätzliche Kräfte an den Lagerpunkten erzeugt, die eine exakte Einstellung und Bestimmung der resultierenden Düsenanpresskraft erschweren könnten. Dies wird durch eine entsprechende Lagerung, die eine maximale Beweglichkeit des Federelements in den Lagerpunkten ermöglicht, vermieden. Beispielsweise kann eine Lagerung über Drehgelenke an vorzugsweise stegförmigen Anschlusselementen vorgesehen werden, so dass sich die Enden des Federelements über die Drehgelenke frei drehen können, wobei eventuelle Verschiebungen des Federelements oder von Teilen davon auf Grund der Verformung des Federelements durch eine elastische Verformung der stegförmigen Anschlusselemente zumindest teilweise kompensiert werden könnte.

Im Zusammenhang mit der Antriebseinheit kann im Bereich des Federelements eine Zentrieranordnung vorgesehen sein, die dafür sorgt, dass bei einer elastischen Verformung des Federelements weiterhin eine störungsfreie Bewegung der Antriebseinheit möglich ist.

Die vorliegenden Erfindung kann insbesondere an einer holmlosen Spritzgießmaschine eingesetzt werden, wie sie beispielsweise in der DE 10 2007 050 689 A1 beschrieben ist, da das dort vorgestellte Maschinenrahmenkonzept eine entsprechend einfache Anordnung des Federelements ermöglicht und eine direkte Krafteinleitung der der Düsenanpresskraft entgegenwirkenden Kraft über das Federelement in den Maschinenrahmen in einfacher Weise erzielbar ist. Entsprechend ist der Offenbarungsgehalt der DE 10 2007 050 689 A1 durch Verweis vollständig hierin mit aufgenommen.

### KURZE BESCHREIBUNG DER FIGUREN

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Zeichnungen zeigen hierbei in reinschematischer Weise in
- Fig. 1: eine perspektivische Darstellung einer erfindungsgemäßen Spritzgießmaschine;
- Fig. 2: eine Ansicht einer weiteren Ausführungsform einer erfindungsgemäßen Spritzgießmaschine von unten;
- Fig. 3: eine Ansicht einer weiteren Ausführungsform einer erfindungsgemäßen Spritzgießmaschine von unten;
- Fig. 4: eine Ansicht einer vierten Ausführungsform einer erfindungsgemäßen Spritzgießmaschine von unten;
- Fig. 5: eine Ansicht einer erfindungsgemäßen Spritzgießmaschine ähnlich derjenigen aus Fig. 4 im Zustand des Anpressens der Düse an eine Form;
- Fig. 6: eine Detailansicht des Federelements aus der Spritzgießmaschine gemäß den Figuren 4 oder 5; und in
- Fig. 7: eine Detailansicht der Lagerung eines Federelements nach einer weiteren Ausführungsform.

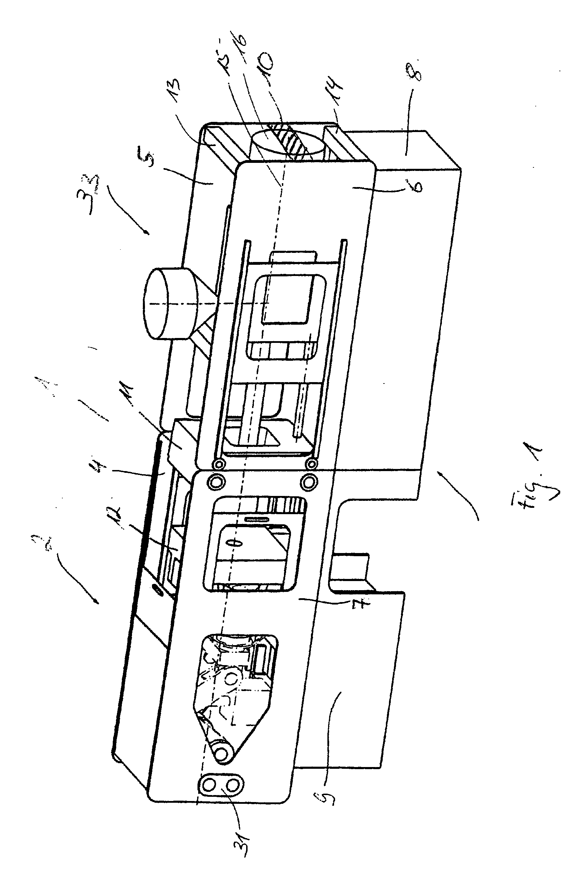

Die Fig. 1 zeigt eine perspektivische Darstellung einer erfindungsgemäßen Spritzgießmaschine 1. Eine derartige Spritzgießmaschine 1 ist prinzipiell bekannt und ist beispielsweise in der DE 10 2007 050 689 A1 ausführlich beschrieben, wobei die Offenbarung der DE 10 2007 050 689 A1 durch Verweis vollständig hierin mit aufgenommen ist.

Die Spritzgießmaschine 1 umfasst eine Schließeinheit 2 und eine Einspritzeinheit 33. Die Einspritzeinheit 33 umfasst eine bewegliche Spritzeinheit 3, durch z.B. plastifizierter Kunststoff über eine Düse in eine Form gespritzt wird, wo der Kunststoff erstarrt und das entsprechende Kunststoffspritzgussprodukt bildet. Die Schließeinheit 2 betätigt hierbei die Formteile, um die Form zu öffnen, so dass das fertiggestellte Kunststoffspritzgussprodukt aus der Form entnommen werden kann. Für den nächsten Spritzvorgang wird die Form bzw. das Werkzeug durch die Schließeinheit 2 entsprechend geschlossen. Ein Teil einer Form bzw. des Werkzeugs ist hierbei an der beweglichen Schließeinheit 2 angeordnet, während der andere Teil der Form bzw. des Werkzeugs an einer feststehenden Werkzeugaufspannplatte 11 angeordnet ist, durch die hindurch die Spritzeinheit 3 mit der Düse an der Form anliegt, um den Kunststoff in eine Öffnung der Form zu spritzen. In Fig. 1 ist die an der Schließeinheit 2 angeordnete bewegliche Platte 12zu erkennen, an der eine Formhälfte angeordnet werden kann. Die feststehende Werkzeugaufspannplatte 11 kann als Trennung zwischen Einspritzeinheit 33 und Schließeinheit 2 angesehen werden.

Gemäß der Erfindung weist die Spritzgießmaschine 1, wie sie in der Fig. 1 dargestellt ist, eine Antriebseinheit auf (in Fig. 1 nicht dargestellt), welche die Spritzeinheit 3 in Richtung der feststehenden Werkzeugaufspannplatte 11 bewegen bzw. verfahren kann.

Hierbei ist die Antriebseinheit mit ihren Verbindungsseiten zum einen an der beweglichen Spritzeinheit 3 angeordnet und zum anderen gegenüber einem Federelement 10 gelagert, welches als Traverse an den Seitenwänden 5 und 6 befestigt ist, die die Spritzeinheit 3 umschließen.

Bei dem gezeigten Ausführungsbeispiel der Fig. 1 weist die Spritzgießmaschine 1 eine Rahmenkonstruktion mit den Seitenwänden 5, 6, 4, 7 mit dazwischen angeordneten Traversen 13, 14 und 31 sowie der dazwischen stehenden Werkzeugaufspannplatte 11 auf. Die entsprechende Rahmenkonstruktion ist auf einem Maschinenbett 8, 9 gelagert, welches in gleicher Bauart mit Seitenwänden und Traversen ausgebildet sein kann.

Neben der gezeigten Form einer Spritzgießmaschine 1 mit einer kompakten Rahmenbauweise, bei der auf entsprechende Holmanordnungen zur Führung der beweglichen Spritzeinheit 3 und entsprechender beweglicher Komponenten der Schließeinheit 2 weitgehend verzichtet werden kann, kann eine erfindungsgemäße Spritzgießmaschine jedoch auch die konventionelle Gestaltung in Form einer Spritzgießmaschine mit entsprechenden Holmanordnungen aufweisen. Die erfindungsgemäßen Spritzgießmaschinen umfassen somit holmlose Spritzgießmaschinen als auch konventionelle Spritzgießmaschinen mit Holmanordnung.

Wie sich aus der Fig. 1 ergibt, kann das Federelement 10, welches zur Erzeugung einer Düsenanpresskraft eingesetzt wird, beispielsweise als Traverse des Maschinenrahmens ausgebildet sein und vorzugsweise zentriert zur Spritzachse 15, die entlang der Spritzrichtung mittig durch den Spritzzylinder und die Düse definiert ist, angeordnet sein.

Obwohl in Fig. 1 die Antriebseinheit, die die Bewegung der Spritzeinheit 3 ermöglicht, nicht gezeigt ist, ist leicht vorstellbar, dass beispielsweise bei einer Anordnung der Antriebseinheit zwischen dem hinteren Ende 16 der Spritzeinheit 3 und dem Federelement 10 durch die Betätigung der Antriebseinheit mit einer Vergrößerung des Abstands der Verbindungsseiten eine Bewegung erzeugt wird, die die Spritzeinheit 3 und das Federelement 10 voneinander weg bewegen, bis die Düse der Spritzeinheit 3 an der Form anschlägt. Sofern durch die Antriebseinheit weiterhin eine Antriebskraft erzeugt wird, so wird das Federelement 10 anschließend elastisch verspannt, wobei die dadurch erzeugte Federkraft den Anpressdruck der Düse an die Form darstellt, die auch erhalten bleibt, wenn die Bewegung der Antriebseinheit in der entsprechenden Position gestoppt wird. Diese Anpresskraft wird dazu verwendet, die Düse sicher beim Spritzvorgang gegen die Form zu pressen und insbesondere auch bei einem Nachspritzvorgang sicherzustellen, dass keine Lücken zwischen der Düse und der Form entstehen, durch die Material entweichen könnte.

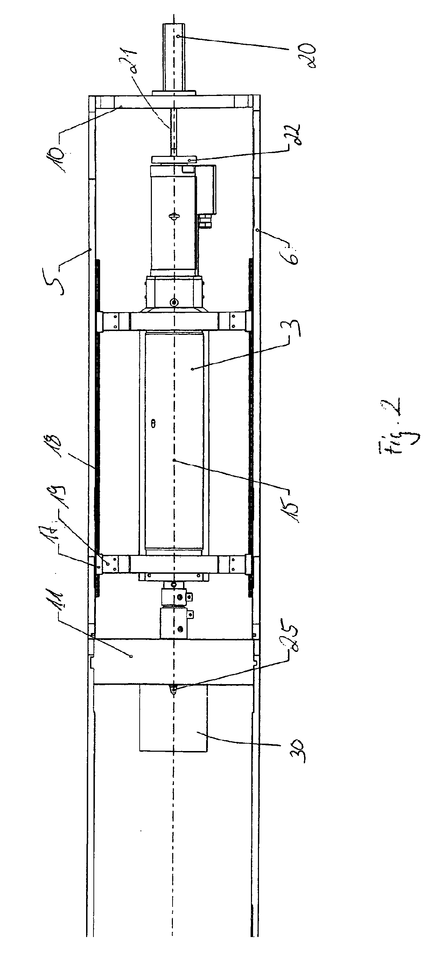

Die Fig. 2 zeigt in einer Ansicht von unten eine detaillierter Ansicht einer weiteren Ausführungsform einer erfindungsgemäßen Spritzgießmaschine. Hierbei werden, wie auch bei der nachfolgenden Beschreibung der übrigen Ausführungsbeispiele für identische oder ähnliche Komponenten gleiche Bezugszeichen verwendet, wobei auf eine wiederholte Beschreibung identischer oder ähnlicher Komponenten in den nachfolgenden Ausführungsbeispielen verzichtet wird.

Fig. 2 zeigt die Spritzeinheit 3, die über zwei in der Fig. 2 dargestellte bewegliche Traversen 19 entlang der Spritzachse 15 bewegbar ist, wobei an den beweglichen Traversen 19 Gleitelemente 17 vorgesehen sind, die in entsprechenden Schienenanordnungen 18 an den Seitenwänden 5 und 6 vorgesehen sind, um eine Linearführung für die Spritzeinheit 3 darzustellen.

Die Spritzeinheit 3 weist eine Düse 25 auf, die durch die feststehende Werkzeugaufspannplatte 11. hindurch ragt und an der Einspritzöffnung der Form 30 bzw. des Werkzeugs 30 anliegt.

Zur Bewegung der Spritzeinheit 3 entlang der Schienenanordnungen 18 ist eine Antriebseinheit mit einem Antrieb 20, einer Antriebsstange 21 und einem Befestigungselement 22 für die Antriebsstange 21 an der Spritzeinheit 3 vorgesehen.

Wenn der Antrieb 20 die Antriebsstange 21 in Richtung der Form 30 schiebt, bewegt sich die Spritzeinheit 3 mit der Düse 25 in Richtung der Form 30 bzw. des Werkzeugs, bis die Düse 25 an der Form zur Anlage kommt. Bei der weiteren Erzeugung einer Antriebskraft durch den Antrieb 20 bewegt sich die Antriebsstange weiter und biegt das Federelement 10 elastisch durch bis die Federkraft der Antriebskraft der Antriebseinheit entspricht. Wird die Position der Antriebsstange 21 in dieser Position fixiert, bleibt die Federkraft des elastischen Federelements erhalten, so dass die Federkraft die Düse 25 gegen die Form 30 presst. Entsprechend ist eine einfache, aber wirksame Düsenanpressvorrichtung geschaffen.

Insbesondere können der Antrieb 20, die Antriebsstange 21 und das Befestigungselement 22 sowie das Federelement 10 zentriert, insbesondere konzentrisch zur Spritzachse 15 angeordnet sein, so dass bei der Ausübung der Düsenanpresskraft durch die elastische Verformung des Federelements 10 die Düse gerade auf das Formwerkzeug 30 gepresst wird.

Durch die Vermeidung von Momenten bei der Krafteinleitung der Düsenanpresskraft kann eine besonders definierte Einstellung der Düsenanpresskraft erfolgen. Allerdings ist auch eine aus der Spritzachse 15 versetzte Anordnung der Antriebseinheit und/oder des Federelements 10 möglich.

Der Antrieb 20 kann durch jeden geeigneten Antrieb gebildet werden, der eine Linearbewegung der Spritzeinheit 3 ermöglicht. Beispielsweise kann es sich um einen beliebigen Aktuator handeln, der die Antriebsstange 21 hin und her bewegen kann.

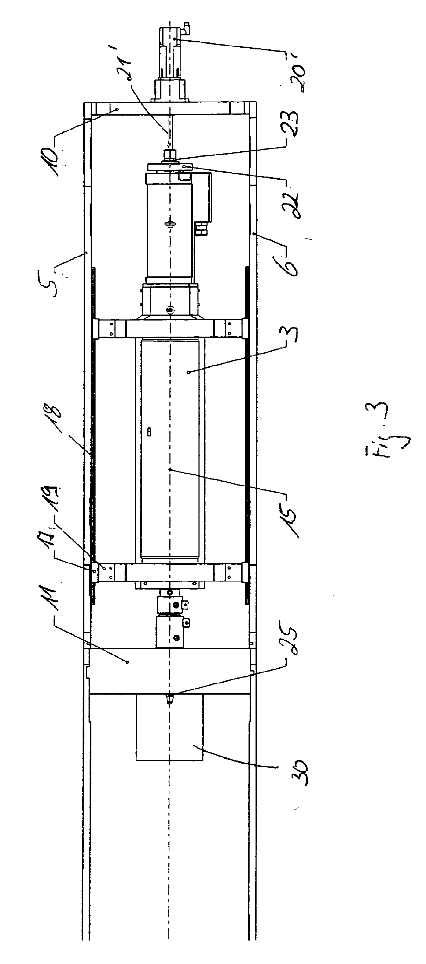

Insbesondere kann es sich jedoch bei dem Antrieb um einen Spindelmotor handeln, der eine Gewindespindel antreibt, wie in der Ausführungsform Fig. 3 gezeigt. Entsprechend unterscheidet sich die Ausführungsform der Fig. 3 von derjenigen der Fig. 2 nur dadurch, dass anstelle eines Antriebs 20 in Form eines Aktuators ein Spindelmotor 20' vorgesehen ist, der eine Gewindespindel 21' antreibt, die mit einer Spindelmutter 23 zusammenwirkt. Die Spindelmutter 23 ist an dem Befestigungselement 22 drehfest angeordnet, welche wiederum mit der verschiebbaren Spritzeinheit 3 fest verbunden ist. Durch Betätigung der Gewindespindel 21' über den Spindelmotor 20' kann somit durch Ein- und Ausschrauben der Gewindespindel 21' in der Spindelmutter 23 die Spritzeinheit 3 entlang der Spritzachse 15 verfahren werden, um die Düse 25 mit der Form 30 in Anlage zu bringen oder von dieser zu entfernen.

In gleicher Weise wie in Fig. 2 wird bei einer weiteren Betätigung der Gewindespindel 21 nachdem die Düse 25 an der Form 30 anliegt, das Federelement 10 verbogen, so dass die elastische Federkraft eine Düsenanpresskraft erzeugt, die dem Spritzdruck beim Spritzen bzw. dem Nachdruck beim Nachspritzen entgegenwirkt und so dafür sorgt, dass die Düse fest an der Form anliegt.

Wie sich wiederum aus Fig. 3 ergibt, ist der Spindelmotor 20' mit der Gewindespindel 21' zentriert zur Spritzachse 15 angeordnet, um die entsprechenden Kräfte, d. h. die durch das Federelement 10 erzeugte Federkraft zentral auf die Spritzeinheit 3 und somit die Düse 25 zu übertragen. Neben einer vollständig konzentrischen Anordnung des Spindelmotors 20' der Gewindespindel 21' und der Spindelmutter 23 mit der Spritzachse 15 bzw. der Düse 25 kann auch eine zentrieile Anordnung mit in einer Richtung versetzten Anordnung der entsprechenden Komponenten gewählt werden.

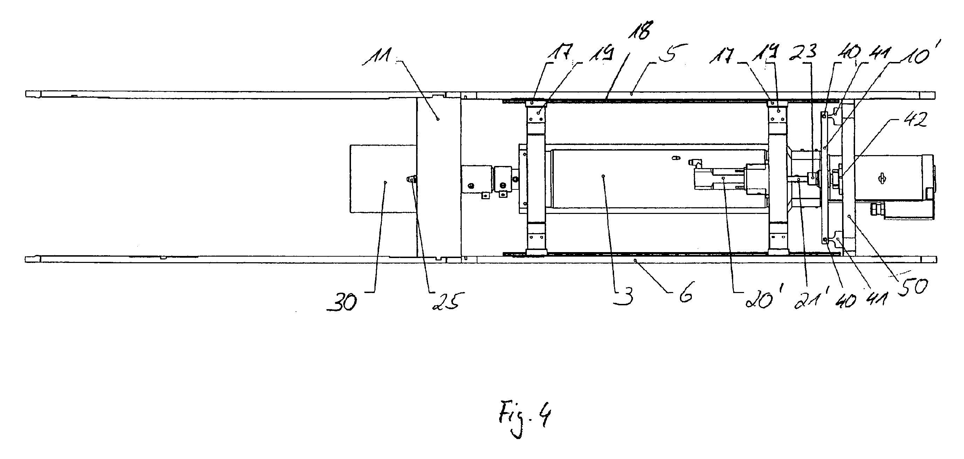

In der Fig. 4 ist eine weitere erfindungsgemäße Spritzgießmaschine dargestellt, die sich von den Ausführungsformen der Figuren 2 und 3 dadurch unterscheidet, dass das Federelement 10' als separates Bauteil ausgebildet ist und nicht durch eine Traverse des Maschinenrahmens gebildet ist. Entsprechend ist eine spezielle Anordnung des Federelements 10' an den Maschinenrahmen vorgesehen, auf die später detailliert eingegangen wird.

Darüber hinaus unterscheidet sich die Ausführungsform der Fig. 4 von denjenigen der Figuren 2 und 3 dadurch, dass der Antrieb bzw. Spindelmotor 20' nicht ortsfest an dem Maschinenrahmen bzw. an dem Maschinenbett angeordnet ist, sondern an der verfahrbaren Spritzeinheit 3, so dass er mit dieser bewegbar ist.

Durch die Anordnung des Spindelmotors 20' an der Traverse 19 der verfahrbaren Spritzeinheit 3 ist die mit der Gewindespindel 21' zusammenwirkende Spindelmutter 23 ortsfest an dem Federelement 10' befestigt, welches über eine Lagerung mit dem Maschinenrahmen verbunden ist. Durch den Antrieb der Gewindespindel 21' wird über das Gewinde der Gewindespindel 21' im Zusammenwirken mit der Spindelmutter 23 die Spritzeinheit 3, an der der Spindelmotor 20' fest angeordnet ist, entlang der Schienenanordnungen 18 hin und her bewegt. Sobald die Düse 25 am Formwerkzeug 30 anliegt und der Spindelmotor 20' weiter so bewegt wird, dass die Spritzeinheit 3 in Richtung der Form 30 verfahren wird, wird das Federelement 10' belastet, so dass es sich durch elastische Verformung durchbiegt. Diese elastische Verformung stellt wiederum den Düsenanpressdruck bereit, mit der die Düse 25 gegen die Form 30 gedrückt wird.

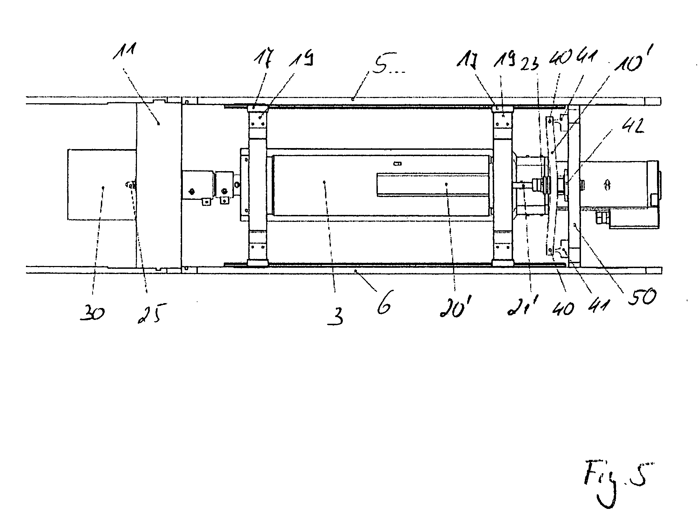

Dies ist in der Fig. 5 dargestellt, die das durchgebogene Federelement 10' zeigt.

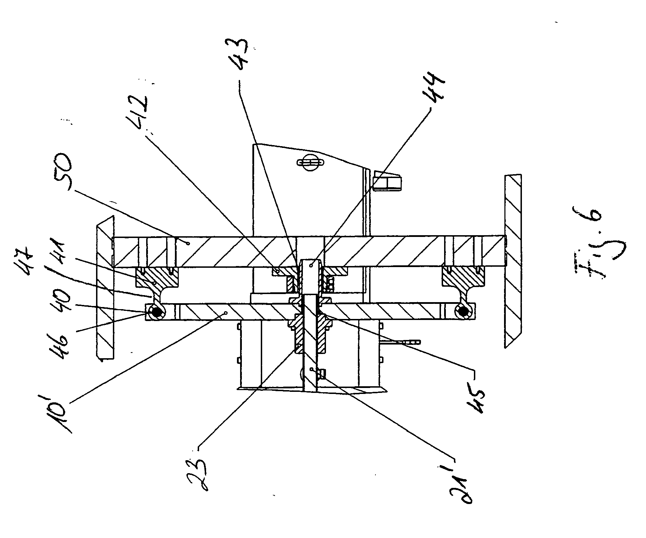

Die Fig. 6 zeigt die Anordnung des Federelements 10' an der Traverse 50 des Maschinenrahmens im größeren Detail. Alternativ könnte das Federelement an der feststehenden Werkzeugaufspannplatte angeordnet sein.

An der Traverse 50 sind zwei Haltelemente 41 über Schraubverbindungen ortsfest angeordnet, die einen aus einem quaderförmigen Grundkörper sich erstreckenden Steg mit einem Gelenkkopf 46 aufweisen. An dem Gelenkkopf 46 ist über ein Drehgelenk 40 jeweils das Federelement 10' aufgenommen.

In der Mitte des Federelements ist die Gewindemutter 23 angeordnet, wobei eine Öffnung im Federelement 10' vorgesehen ist, durch das die Gewindespindel 21' hindurch geführt ist. Die Gewindespindel 21' steht im Eingriff mit der Spindelmutter 23, sodass die Gewindespindel 21' sich im Bezug zur Spindelmutter 23 und zum Federelement 10' hin und her bewegen kann.

Entsprechend ist auch in der Traverse 50 eine Öffnung vorgesehen, durch die hindurch die Gewindespindel 21' geführt werden kann.

Zur Führung der Gewindespindel 21' ist eine Zentriereinheit 42 an der Traverse 50 angeordnet, welche eine Gleitlagerbuchse 43 aufweist, die mit einem Zentrierdorn 44 zusammenwirkt, der an dem Federelement 10' angeordnet ist. Der Zentrierdorn 44 ist beweglich in der Gleitlagerbuchse 43 aufgenommen, so dass der Zentrierdorn 44 axial in der Gleitlagerbuchse 43 verschiebbar ist. Der Zentrierdorn 44 weist eine Bohrung auf, durch die hindurch die Gewindespindel 21' geführt werden kann. Bei anderen Ausführungsformen, in denen sich die die Gewindespindel nicht durch die Zentriereinheit bewegen muss, wie z.B. im Fall, dass der Spindelmotor am Federelement angeordnet ist oder ein Aktuator an der Spritzeinheit 3 befestigt ist und eine Kolbenstange betätigt, die am Federelement befestigt ist, kann auf die Bohrung im Zentrierdorn verzichtet werden. Allerdings kann auch in einem derartigen Fall eine entsprechende Zentriereinheit vorgesehen werden, um das Federelement bei der Durchbiegung zu führen.

Die Gleitlagerbuchse 43 ermöglicht zusammen mit der Zentriereinheit 42, dass bei einer Durchbiegung des Federelements 10' die Gewindespindel 21' durch die Bohrung 44 eine exakte Führung erhält, so dass keine Einflüsse durch Verkanten oder dergleichen entstehen können. Darüber hinaus ist durch die Lagerung des Federelements 10' über die Drehgelenke 40 und die Halteelemente 41 sicher gestellt, dass eine exakte und definierte Düsenanpresskraft durch die Verformung des Federelements 10' bereit gestellt werden kann, ohne dass es durch entsprechend zusätzlich entstehende Momente oder Kräfte zu Beeinträchtigungen kommt. Durch die Anordnung des Federelements 10' über ein Drehgelenk 40 and den Gelenkkopf 46 des Halteelements 41 ist sicher gestellt, dass sich die jeweiligen Enden des Federelements 10' frei um eine Achse senkrecht zur Bildebene der Fig. 6 drehen können, so dass durch die Lagerung keine Biegemomente auf das Federelement 10' eingebracht werden. Darüber hinaus ermöglicht der dünne Steg 47 des Halteelements 41 eine Verschiebung des Drehgelenks 40 in Richtung der Gewindespindel 21' durch entsprechende elastische Verformung des Stegs 47, so dass auch dadurch keine wesentlichen zusätzlichen Kräfte oder Momente aufgebracht werden. Entsprechend kann eine feste Verbindung zwischen dem Federelement und der Traverse anstelle einer losen Lagerung mit z.B. Schubelementen vorgesehen werden, was die Konstruktion vereinfacht.

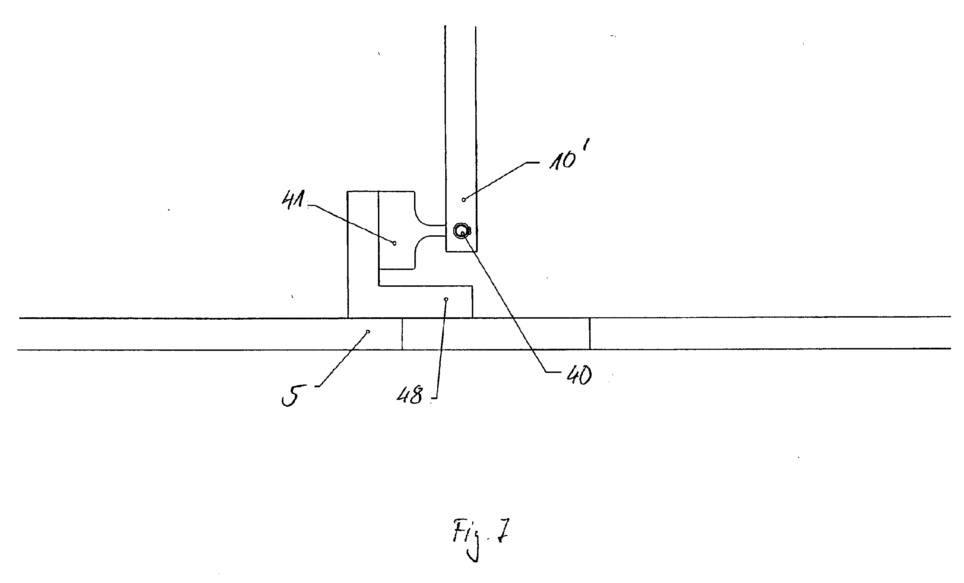

Während bei der Ausführungsform der Fig. 6 die Halteelemente 41 direkt auf einer Traverse 50 des Maschinenrahmens angeordnet sind, zeigt die Fig. 7 eine Ausrührungsform, bei der die Halteelemente 41 über Winkelelemente 48 an den Seitenwänden 5 des Maschinenrahmens angeordnet sind.

Auch hier wird, ebenfalls wie bei den vorangegangenen Ausführungsformen, gewährleistet, dass die Kraft auf das Widerlager in Form der Lageranordnung für das elastische Federelement 10 bzw. 10' direkt in den Maschinenrahmen eingeleitet wird, der einen kompakten und stabilen Rahmen für die gesamte Spritzgießmaschine bereitstellt.

Obwohl die vorliegende Enfindung, wie bereits oben ausgeführt, auch im Zusammenhang mit anderen Spritzgießmaschinen Verwendung finden kann, die eine Holmstruktur aufweisen, ist die Verwendung bei einer holmlosen Spritzgießmaschine mit der kompakten und stabilen Maschinenrahmenkonstruktion, wie sie beispielsweise in Fig. 1 gezeigt ist, besonders bevorzugt, da hier eine optimale Krafteinleitung der Düsenanpresskraft bzw. entsprechenden Gegenkraft in den Maschinenrahmen gewährleistet ist. Gleichwohl können auch bei andersartigen Spritzgießmaschinen mit Holmen die Vorteile der Erfindung genutzt werden, wenn die Antriebseinheit mit einer Verbindungsseite, also beispielsweise die Spindelmutter oder ein Spindelmotor, über ein Federelement an einem Maschinenbett angeordnet ist.

Obwohl die vorliegende Erfindung anhand der Ausführungsbeispiele detailliert beschrieben worden ist, ist für einen Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen werden können oder dass andersartige Kombinationen der vorgestellten Merkmale vorgenommen werden können, ohne dass der Schutzbereich der beigefügten Ansprüche verlassen wird. Die Erfindung umfasst insbesondere sämtliche Kombinationen aller vorgestellten Einzelmerkmale.

## Patentansprüche

1. Spritzgießmaschine mit einer Spritzeinheit (3), welche eine Düse (25) umfasst, die gegen eine Form (30) verfahrbar ist, wobei eine Antriebseinheit vorgesehen ist, die zumindest Teile der Spritzeinheit mit der Düse relativ zur Form bewegt, wobei die Antriebseinheit zwei Verbindungsseiten zur Verbindung mit den anzutreibenden Komponenten aufweist, die während des Antriebs zueinander beweglich sind, wobei eine Verbindungsseite der Antriebseinheit an einem Maschinenrahmen oder Maschinenbett der Spritzgießmaschine und die andere Verbindungsseite an einem verfahrbaren Teil der Spritzeinheit angeordnet oder mit diesen in Wirkverbindung steht,
**dadurch gekennzeichnet, dass**
die Antriebseinheit mit der am Maschinenrahmen oder Maschinenbett vorgesehenen Verbindungsseite der Antriebseinheit an einem Federelement (10,10') gelagert ist, so dass durch elastische Verformung des Federelements eine Düsenanpresskraft bereit gestellt wird.

2. Spritzgießmaschine nach Anspruch 1,
**dadurch gekennzeichnet, dass**
die Antriebseinheit einen Antrieb (20, 20') und eine Einheit zur Erzeugung einer translatorischen Bewegung, insbesondere einen Motor und eine von dem Motor angetriebene Gewindespindel (21,21') sowie eine mit der Gewindespindel zusammenwirkende Spindelmutter (23) umfasst.

3. Spritzgießmaschine nach Anspruch 2,
**dadurch gekennzeichnet, dass**
der Antrieb, insbesondere der Motor der Antriebseinheit, oder das bewegliche Ende der Einheit zur Erzeugung einer translatorischen Bewegung (21, 21'), insbesondere die Spindelmutter an dem Federelement (10,10') angeordnet sind.

4. Spritzgießmaschine nach einem der vorhergehenden Ansprüche,
**dadurch gekennzeichnet, dass**
die mit dem Federelement (10,10') verbundene Verbindungsseite (23;20,20') der Antriebseinheit direkt und unmittelbar mit dem Federelement, insbesondere in Form eines Festlagers verbunden ist.

5. Spritzgießmaschine nach einem der vorhergehenden Ansprüche,
**dadurch gekennzeichnet, dass**
das Federelement (10,10') als Stab oder Platte ausgebildet ist, insbesondere durch ein Bauteil des Maschinenrahmens oder des Maschinenbetts, vorzugsweise durch eine quer zur Spritzrichtung angeordnete Traverse.

6. Spritzgießmaschine nach einem der vorhergehenden Ansprüche,
**dadurch gekennzeichnet, dass**
das Federelement (10,10') einen Federweg aufweist, der parallel oder konzentrisch zur Spritzachse verläuft, insbesondere eine Durchbiegung eines Stabs oder einer Platte in einer Richtung entgegen der Spritzrichtung darstellt.

7. Spritzgießmaschine nach einem der vorhergehenden Ansprüche,
**dadurch gekennzeichnet, dass**
das Federelement (10,10') und/oder das daran angeordnete Bauteil (23;20,20') einer Verbindungsseite der Antriebseinheit konzentrisch zur Spritzachse oder Düsenspitze oder entlang einer Symmetrieachse versetzt zur Spritzachse oder dem Mittelpunkt der Düse angeordnet sind.

8. Spritzgießmaschine nach einem der vorhergehenden Ansprüche,
**dadurch gekennzeichnet, dass**
das Federelement (10,10') derart gelagert ist, dass bei einer elastischen Verformung des Federelements gemäß einem vorgegebenen Federweg an den Lagerpunkten des Federelements keine die elastische Verformung entsprechend des vorgesehenen Federwegs verfälschende Krafteinwirkung eintritt, insbesondere eine Lagerung über Drehgelenke an vorzugsweise stegförmigen Anschlusselementen vorgesehen ist.

9. Spritzgießmaschine nach einem der vorhergehenden Ansprüche,
**dadurch gekennzeichnet, dass**
eine Zentrieranordnung für die Antriebseinheit im Bereich des Federelements vorgesehen ist.

10. Düsenanpressvorrichtung zum Andrücken einer Düse (25) einer Spritzgießmaschine gegen eine Form (30) mit einer Antriebseinheit (20,20';21,21';23), die zwei Verbindungsseiten zur Verbindung mit den anzutreibenden Komponenten aufweist, die während des Antriebs zueinander beweglich sind, wobei eine Verbindungsseite der Antriebseinheit an einem Maschinenrahmen oder Maschinenbett einer Spritzgießmaschine und die andere Verbindungsseite an einem verfahrbaren Teil einer Spritzeinheit der Spritzgießmaschine angeordnet werden oder mit diesen in Wirkverbindung stehen kann,
**dadurch gekennzeichnet, dass**
ein Federelement an der mit der am Maschinenrahmen oder Maschinenbett vorgesehenen Verbindungsseite der Antriebseinheit vorgesehen ist, so dass die am Maschinenrahmen oder Maschinenbett vorgesehenen Verbindungsseite der Antriebseinheit über das Federelement gelagert ist, so dass durch elastische Verformung des Federelements eine Düsenanpresskraft bereit gestellt werden kann, insbesondere mit den Merkmalen der Ansprüche 2 bis 9.

## Claims

1. Injection moulding machine with injector unit (3), comprising a nozzle (25) that can be traversed against a mold (30), wherein a drive unit is provided for moving at least parts of the injector unit with the nozzle relative to the mold, wherein the drive unit comprises two connecting sides for connecting to the components to be driven, which can be moved towards each other during driving, wherein one connecting side of the drive unit is disposed at a machine frame or machine bed of the injection molding machine and the other connecting side is disposed at a traversable part of the injector unit or is effectively connected thereto,
**characterised by** the fact that
the drive unit having the connecting side of the drive unit provided at the machine frame or machine bed is mounted to a spring element (10, 10'), such that elastic deformation of the spring element provides a nozzle contact force.

2. Injection moulding machine in accordance with claim 1,
**characterised by** the fact that
the drive unit comprises a drive (20, 20') and a unit for generating a translatory motion, especially a motor and a threaded spindle (21, 21') driven by the motor, and a spindle nut (23) acting in cooperation with the threaded spindle.

3. Injection moulding machine in accordance with claim 2,
**characterised by** the fact that
the drive, particularly the motor of the drive unit, or the movable end of the unit for generating a translatory motion (21, 21'), particularly the spindle nut, are disposed at the spring element (10, 10').

4. Injection moulding machine in accordance with any of the previous claims,
**characterised by** the fact that
that connecting side (23; 20, 20') of the drive unit which is connected to the spring element (10, 10') is connected direct to the spring element, particularly in the form of a fixed bearing.

5. Injection moulding machine in accordance with any of the previous claims,
**characterised by** the fact that
the spring element (10, 10') is formed as a rod or plate, particularly by a part of the machine frame or machine bed, preferably by a traverse disposed transversely to the injection direction.

6. Injection moulding machine in accordance with any of the previous claims,
**characterised by** the fact that
the spring element (10, 10') has a spring displacement, which runs parallel or concentrically with the injection axis, particularly constituting a deflection of a rod or a plate in a direction opposite the injection direction.

7. Injection moulding machine in accordance with any of the previous claims,
**characterised by** the fact that
the spring element (10,10') and/or that part (23; 20, 20') of a connecting side of the drive unit which is disposed thereat are arranged concentrically with the injection axis or nozzle tip or along an axis of symmetry offset from the injection axis or the centre point of the nozzle.

8. Injection moulding machine in accordance with any of the previous claims,
**characterised by** the fact that
the spring element (10, 10') is mounted such that, where the spring element is elastically deformed in accordance with a predetermined spring displacement at the mounting points of the spring element, no force acts to falsify the elastic deformation of the intended spring displacement, in particular mounting is provided via rotary joints at preferably land-shaped connecting elements.

9. Injection moulding machine in accordance with any of the previous claims,
**characterised by** the fact that
a centring arrangement for the drive unit is provided in the region of the spring element.

10. Nozzle contact device for pressing a nozzle (25) of an injection moulding machine against a mould (30) with a drive unit (20, 20'; 21,21 23), which has two connecting sides for connecting to the components to be driven, which are movable towards each other during driving, wherein one connecting side of the drive unit may be disposed at a machine frame or machine bed of the injection moulding machine and the other connecting side may be disposed at a traversable part of an injector unit of the injection moulding machine or may be effectively connected thereto,
**characterised by** the fact that
a spring element is provided on that connecting side of the drive unit which is provided at the machine frame or machine bed, such that the connecting side of the drive unit which is provided at the machine frame or machine bed is mounted via the spring element, such that elastic deformation of the spring element can provide a nozzle contact force, particularly comprising the characteristics of claims 2 to 9.

## Revendications

1. Machine de moulage par injection avec une unité d'injection (3) qui comprend une tuyère (25) qui est déplaçable contre un moule (30), une unité d'entraînement étant prévue qui déplace au moins des parties de l'unité d'injection avec la tuyère par rapport au moule, l'unité d'entraînement présentant deux côtés de liaison pour la liaison avec les composants à entraîner qui sont mobiles l'un par rapport à l'autre pendant entraînement, un côté de liaison de l'unité d'entraînement étant placé sur un cadre de machine ou un banc de machine de la machine de moulage par injection et l'autre côté de liaison étant placé sur une partie déplaçable de l'unité d'injection ou étant en relation opérationnelle avec ceux-ci,
**caractérisée en ce**
**que** l'unité d'entraînement est positionnée sur un élément ressort (10, 10') avec le côté de liaison de l'unité d'entraînement qui est prévu sur le cadre de la machine ou le banc de machine si bien qu'un force de pression de la tuyère est mise à disposition par déformation élastique de l'élément ressort.

2. Machine de moulage par injection selon la revendication 1,
**caractérisée en ce**
**que** l'unité d'entraînement comprend une un entraînement (20, 20') et une unité pour générer un mouvement de translation, en particulier un moteur et une broche filetée (21, 21') entraînée par le moteur ainsi qu'un écrou de broche (23) qui coopère avec la broche filetée.

3. Machine de moulage par injection selon la revendication 2,
**caractérisée en ce**
**que** l'entraînement, en particulier le moteur de l'unité d'entraînement, ou l'extrémité mobile de l'unité pour générer un mouvement de translation (21, 21'), en particulier l'écrou de broche, sont placés sur l'élément ressort (10, 10').

4. Machine de moulage par injection selon l'une des revendications précédentes,
**caractérisée en ce**
**que** le côté de liaison (23 ; 20, 20') de l'unité d'entraînement qui est relié à l'élément ressort (10, 10') est relié directement et de manière immédiate à l'élément ressort, en particulier sous forme de palier fixe.

5. Machine de moulage par injection selon l'une des revendications précédentes,
**caractérisée en ce**
**que** l'élément ressort (10, 10') est configuré comme une barre ou une plaque, en particulier par un composant du cadre de la machine ou du banc de machine, de préférence par une traverse placée transversalement par rapport au sens d'injection.

6. Machine de moulage par injection selon l'une des revendications précédentes,
**caractérisée en ce**
**que** l'élément ressort (10, 10') présente une course de débattement qui est parallèle ou concentrique à l'axe d'injection, qui représente en particulier un fléchissement d'une barre ou d'une plaque dans un sens à l'encontre du sens d'injection.

7. Machine de moulage par injection selon l'une des revendications précédentes,
**caractérisée en ce**
**que** l'élément ressort (10, 10') et/ou le composant qui y est placé (23 ; 20, 20') d'un côté de liaison de l'unité d'entraînement sont concentriques par rapport à l'axe d'injection ou à la pointe de la tuyère ou le long d'un axe de symétrie en étant décalé par rapport à l'axe d'injection ou au centre de la tuyère.

8. Machine de moulage par injection selon l'une des revendications précédentes,
**caractérisée en ce**
**que** l'élément ressort (10, 10') est positionné de telle manière que, lors d'une déformation élastique de l'élément ressort selon une course de débattement prédéterminée, aucun effet de force qui fausse la déformation élastique selon la course de débattement prédéterminée n'intervient aux points de palier de l'élément ressort, qu'en particulier un positionnement est prévu par des pivots sur des éléments de raccord de préférence en forme de barrettes.

9. Machine de moulage par injection selon l'une des revendications précédentes,
**caractérisée en ce**
**qu'**un arrangement de centrage pour l'unité d'entraînement est prévu dans la zone de l'élément ressort.

10. Dispositif de pression de tuyère pour presser une tuyère (25) d'une machine de moulage par injection contre un moule (30) avec une unité d'entraînement (20, 20' ; 21, 21' ; 23) qui présente deux côtés de liaison pour la liaison avec les composants à entraîner qui sont mobiles l'un par rapport à l'autre pendant l'entraînement, un côté de liaison de l'unité d'entraînement étant placé sur un cadre de machine ou un banc de machine d'une machine de moulage par injection et l'autre côté de liaison pouvant être placé sur une partie déplaçable d'une unité d'injection de la machine de moulage par injection ou pouvant être en relation opérationnelle avec ceux-ci,
**caractérisé en ce**
**qu'**un élément ressort est prévu sur le côté de liaison de l'unité d'entraînement qui est prévu sur le cadre de la machine ou le banc de machine si bien que le côté de liaison de l'unité d'entraînement qui est prévu sur le cadre de la machine ou le banc de machine est positionné par l'élément ressort si bien qu'une force de pression de tuyère peut être mise à disposition par déformation élastique de l'élément ressort, en particulier avec les caractéristiques des revendications 2 à 9.
